# FASCICULE DE BREVET EUROPEEN

(11) **EP 0 524 592 B1**
(45) Date de publication et mention de la délivrance du brevet: **12.06.1996**
(21) Numéro de dépôt: 92112421.0
(22) Date de dépôt: 21.07.1992
(51) Int. Cl.: B01D 69/02, B01D 71/00, B01D 71/02, B01D 71/72, B01D 67/00

(54) **Membrane de filtration et procédé de fabrication**
Filtrationsmembran und Verfahren zu deren Herstellung
Filtration membrane and process for the preparation thereof

(30) Priorité: 25.07.1991 FR 9109432
(43) Date de publication de la demande: 27.01.1993
(73) Titulaire: SOCIETE DES CERAMIQUES TECHNIQUES, F-65460 Bazet (FR)
(72) Inventeur: Soria, Raymond, F-65460 Bazet (FR); Defalque, Corinne, F-65000 Tarbes (FR); Gillot, Jacques, Odos, F-65310 Laloubere (FR)
(74) Mandataire: Weinmiller, Jürgen

(56) Documents cités:
- EP-A- 0 190 558
- WO-A-86/05117
- WO-A-88/06477
- FR-A- 2 542 211
- US-A- 4 749 489
- DATABASE WPI Week 7903, Derwent Publications Ltd., London, GB; AN 79-04839B

## Description

La présente invention concerne une membrane pour un dispositif de filtration, de séparation de gaz ou de liquide.

On appelle membrane une structure poreuse présentant une couche superficielle dont les pores de diamètre bien défini déterminent le pouvoir séparateur de la membrane. Une telle membrane est fréquemment formée par un support macroporeux avec une ou plusieurs couches microporeuses superposées.

Cette membrane peut être constituée par de la céramique frittée (avec ou sans l'aide d'une phase vitreuse), du carbone microporeux, du métal fritté, du verre microporeux, ou d'un polymère organique.

Dans le cas d'une membrane constituée par la superposition de plusieurs couches, c'est en général la couche superficielle qui a les pores de plus petit diamètre et qui assure donc la fonction de filtration.

Il a été constaté que les performances de fonctionnement de ces membranes dépendaient non seulement du diamètre de pore de la couche superficielle, mais aussi des interactions chimiques ou physico-chimiques entre la surface de leurs pores et les fluides à filtrer. Il est donc indispensable d'adapter la nature de cette surface au fluide considéré.

Ainsi, le brevet européen EP- 0 263 468 décrit une membrane constituée d'une structure poreuse dont chaque grain est recouvert d'un film très mince d'oxyde métallique (simple ou complexe). Cette couche d'oxyde a pour but de modifier les charges de surface des particules constituant la membrane.

Le brevet français FR-2 611 527 concerne des membranes inorganiques modifiées par adsorption à la surface de la membrane de polymères hydrophiles. Cette modification consiste en l'adsorption physique de polymères et doit donc être faite avant toute utilisation de cette membrane pour une opération de filtration, et après toute opération de lavage.

JP-A-53-139143 décrit l'imprégnation d'un corps céramique poreux avec une solution diluée d'un polyphosphazène afin de rendre le corps hydrophobe. Le produit résultant est destiné à être incorporé dans une électrode à diffusion gazeuse.

FR-A-2 542 211 et US-A-4 749 489 décrivent des membranes composites obtenues par déposition de films de polyphosphazène denses sur la surface extérieure de supports inorganiques poreux.

Le brevet américain US -4 983 566 décrit la dépose à la surface d'une poudre d'adsorbant minéral d'une monocouche d'acide organique perfluoré ou d'un acide phosphonique perfluoré, en vue d'accroître la stabilité chimique de la membrane dans une large gamme de pH.

On sait par ailleurs que les flux de perméation sont maximum lorsque le liquide à filtrer possède des propriétés proches des propriétés de surface des pores de la membrane. Ainsi, pour un liquide hydrophobe (tel que des solvants organiques), les débits maximum sont obtenus pour des membranes hydrophobes. On cherche donc à avoir à sa disposition des membranes hydrophobes, en particulier pour les applications suivantes :
- la filtration de composés organiques (par exemple la purification ou l'élimination de particules solides dans les huiles, ou les hydrocarbones),
- la filtration de fluide où l'on veut récupérer la composante hydrophobe (par exemple la récupération de micelles d'huile dans une émulsion d'huile dans l'eau) ou éliminer la composante hydrophile (par exemple l'élimination de l'eau dans les gaz de fermenteurs).

Certes il existe actuellement des membranes possédant des surfaces hydrophobes. Toutefois, il s'agit uniquement de membranes organiques, dont les caractéristiques ne permettent pas une utilisation dans toutes les conditions de température, de pH, de milieu de filtration ou de pression.

La présente invention a pour but de réaliser de manière simple et économique une membrane présentant de manière irréversible une surface hydrophobe utilisable sans précautions particulières.

La présente invention a pour objet une membrane pour dispositif de filtration ou de séparation de gaz ou de liquide, constituée par une structure poreuse en au moins un matériau choisi parmi la céramique frittée, les métaux frittés, le carbone microporeux, le verre microporeux, ladite structure comportant un support macroporeux avec plusieurs couches microporeuses superposées, la couche microporeuse superficielle ayant la porosité la plus fine, caractérisée par le fait que l'ensemble de la surface extérieure et de la surface intérieure des pores (11, 14) de ladite structure est recouvert d'un film (2) hydrophobe mince et continu d'un polyphosphazène, l'épaisseur dudit film étant comprise entre 0,01% et 10% du diamètre moyen des pores (11, 14) de ladite couche microporeuse superficielle, lui-même compris entre 0,02 et 15 µm.

Ladite structure poreuse est constituée de manière connue de grains fixés les uns aux autres par des parties "liées" de leurs surfaces et laissant entre eux des pores délimités par les parties restantes "exposées" de leurs surfaces ; seules lesdites parties "exposées" des surfaces des grains sont recouvertes dudit film mince qui est continu d'un grain à l'autre.

Compte tenu de la faible épaisseur du film de polyphosphazène, la porosité d'une membrane selon l'invention est sensiblement celle de ladite structure poreuse initiale.

On rappelle qu'un polyphosphazène est un matériau polymérique dont la chaîne est formée par l'alternance d'atomes d'azote et de phosphore liés alternativement par une simple et une double liaison. L'atome de phosphore peut porter deux substituants organiques, R et R', qui peuvent être identiques ou différents.

Un tel matériau est extrêmement stable du point de vue thermique (utilisation possible jusqu'à 300°C) ; il présente une bonne résistance chimique vis-à-vis des solvants ou des milieux acides ou basiques. Enfin, une grande latitude existe quant à la nature des groupements latéraux, permettant une grande flexibilité des propriétés du polymère.

De préférence, on choisit un polyphosphazène de type linéaire ; autrement dit l'enchaînement des atomes de phosphore et d'azote forme une chaîne (-N=P-N=P-N=P-N=), l'atome de phosphore portant les deux substituants organiques R et R'.

Trois classes de polyphosphazènes peuvent être utilisées. Elles sont définies à partir des substituants R et R' portés par l'atome de phosphore. Il s'agit :
- Des polyalkyloxyphosphazènes, les substituants R et R' étant des chaînes alkyl liées au phosphore par un atome d'oxygène : le poly bis(trifluoro éthoxy) phosphazène, le poly bis éthoxy phosphazène sont des exemples de ce type de produit, où les substituants R et R' sont identiques.
- Des polyalkylaminephosphazènes, les substituants R et R' étant des chaînes alkyl liées au phosphore par un atome d'azote : le poly bis (éthyl amine) phosphazène, le poly bis(butyl amine) phosphazène sont des exemples de ce type de produit, où les substituants R et R' sont identiques.
- Des polyaryloxyphosphazènes, les substituants R et R' étant des noyaux benzéniques portant eux-mêmes des groupes organiques pouvant être identiques ou différents, et étant en position quelconque sur les noyaux benzéniques. Ces noyaux benzéniques sont liés au phosphore par un atome d'oxygène. On peut citer comme groupement substituant le noyau benzénique, et sans notion limitative, les groupes indiqués ci-dessous :
l'hydrogène et les radicaux méthoxy, phénoxy, méthyl, éthyl, propyl et ses isomères, butyl et ses isomères, vinyl, allyl, butényl, trichlorométhyl, trifluorométhyl.

La présente invention a également pour objet un procédé de préparation d'une membrane telle que définie précédemment, et caractérisé par le fait qu'il comporte les phases suivantes :
- la préparation d'une solution de polyphosphazène à l'aide d'au moins un solvant de ce polymère,
- l'imprégnation de ladite structure poreuse par ladite solution, de manière que les pores de ladite structure soient remplis par ladite solution,
- le séchage à température sensiblement ambiante.

Ladite imprégnation peut se faire de différentes manières, par exemple par plongée dans un réservoir contenant la solution, par filtration tangentielle de cette solution, par filtration frontale de cette solution.

Le polyphosphazène peut être dissous dans au moins un solvant choisi parmi :
- les alcools, par exemple le méthanol ou le propanol ;
- les cétones, par exemple l'acétone ou la méthyl éthyl cétone ;
- les esters, par exemple l'acétate d'éthyle ;
- les éthers, par exemple le tétrahydrofurane ou le diéthyle éther ;
- les hydrocarbures aromatiques, par exemple le benzène, le toluène, le xylène.

La dissolution peut se faire à chaud ou à la température ambiante selon le polymère et le solvant, avec agitation.

De préférence, ladite solution contient 0,5 à 10% massique de polyphosphazène et le complément en solvant.

Dans une variante du procédé, on utilise un polyphosphazène ayant une structure permettant sa réticulation. Ainsi, on peut mettre en oeuvre un polyaryloxyphosphazène comportant des noyaux benzéniques liés au phosphore au travers d'un atome d'oxygène et portant, en plus des substituants précédemment décrits, une chaîne insaturée, du type vinyl, allyl, butényl. La chaîne de polyphosphazène peut ainsi comporter plus de deux types de substituants latéraux.

On ajoute à la solution de polyphosphazène un agent de réticulation tel qu'un peroxyde. Les peroxydes les plus couramment employés comme agent de réticulation sont le peroxyde de benzoyle, le bis(tertio butylperoxy) 2,2 butane, le terbutylcumyle peroxyde, le diméthyl 2,5 bis (ter-butylperoxy) 2,5 hexane ou le carbonate d'isopropyl et de peroxyter-buthyl, cette liste n'étant pas exhaustive. Ces produits sont employés, de préférence, à une teneur inférieure à 5% massique par rapport au polyphosphazène dans la solution de polymère.

On réalise la mise en place de la couche en polyphosphazène suivant le procédé décrit ci-dessus. Après le séchage de la couche, on procède à une cuisson de réticulation dont le but est de relier les chaînes polyphosphazènes entre elles. Les conditions de réticulation (durée et température) sont fonction de la nature et de la teneur en peroxyde.

Dans une autre variante du procédé, un soufflage à l'aide d'un gaz propre, tel que l'air, ou l'azote (et cela sans caractère limitatif) est réalisé à travers les pièces avant séchage, de façon à accélérer celui-ci. Le gaz employé peut être utilisé à la température ambiante ou être légèrement réchauffé. De préférence, le débit de gaz se situe entre 0,05 et 30 litres à la minute.

L'hydrophobicité des membranes selon l'invention est déterminée par la mesure dite "de l'angle de contact". Sur la base de l'équation de Washburn-Rideal et connaissant les caractéristiques géométriques de la membrane et rhéologiques du fluide test, il est possible de calculer l'angle de contact, comme indiqué dans l'article paru dans le "Journal of Ceramic Society of Japan" - International Edition vol 95, pages 1012 à 1018.

Le tableau I ci-dessous indique l'ordre de grandeur des angles de contact (en degrés) pour deux solvants de référence (l'eau et le n-heptane), mesurés sur une membrane A de l'art antérieur et sur une membrane B selon l'invention. La membrane B est constituée de la membrane A sur laquelle a été déposé un film de polyphosphazène par le procédé précité.

**TABLEAU I**

| | A | B |
|---|---|---|
| Eau | 30 à 40 | supérieur à 90 |
| n-heptane | 55 à 80 | 25 à 45 |

D'autres caractéristiques et avantages de la présente invention apparaîtront au cours de la description suivante de modes de réalisation donnés à titre illustratif, mais nullement limitatif. Dans le dessin annexé :
- la figure 1 est une vue très schématique en coupe d'une membrane selon l'invention,
- la figure 2 est une vue très schématique en coupe du détail A de la figure 1.

### EXEMPLE 1 :

La structure poreuse est un tube microporeux en métal fritté et présentant un diamètre moyen de pores de 3 microns.

On prépare par dissolution une solution de polyphosphazène contenant :
- 10% pondéraux de poly bis(butyl amine) phosphazène,
- 45% pondéraux de toluène,
- 45% pondéraux de xylène.

Après dissolution, la solution est filtrée sur un tamis en nylon ayant une ouverture de maille de 10 microns.

On procède alors à l'imprégnation de la structure poreuse. Celle-ci est obtenue par filtration frontale de la solution sur le support métallique. Le support est ensuite séché à 40°C pendant 48 heures.

### EXEMPLE 2 :

On utilise une stucture poreuse constituée d'un tube en carbone poreux de diamètre intérieur 6 mm, recouvert d'une couche en céramique poreuse dont les pores ont un diamètre moyen de 100 nm.

On prépare par dissolution une solution de polyphosphazène contenant :
- 0,5% pondéraux de poly bis(trifluoro éthoxy) phosphazène,
- 99,5% pondéraux d'acétate d'éthyl.

Après dissolution, la solution est filtrée sur une toile de nylon comme dans l'exemple 1.

On procède alors à l'imprégnation de la structure poreuse. Pour cela, on réalise une filtration tangentielle de la solution qui remplit ainsi la porosité. Le tube en carbone est ensuite séché à la température ambiante pendant 24 heures.

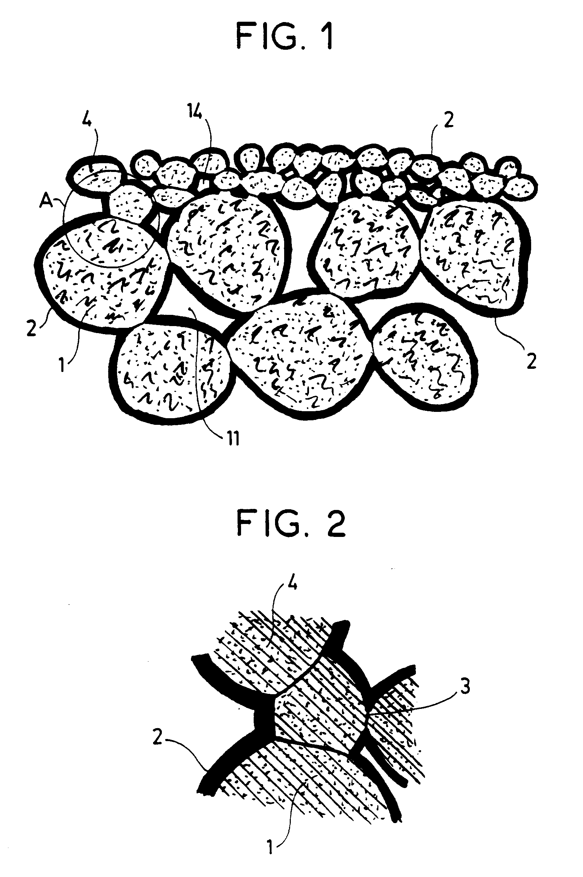

On voit dans les figures 1 et 2 la membrane ainsi obtenue. On a référencé les grains de carbone 1, les grains de céramique 4 et le film de polyphosphazène 2. Les grains 1 ou 4 sont fixés les uns aux autres par des parties liées 3 de leurs surfaces, et laissent entre eux des pores 14 et 11. Les parties exposées des surfaces des grains sont recouvertes du film mince 2 qui est continu d'un grain à l'autre, et ceci dans l'ensemble de la structure.

Tous les films des membranes des exemples suivants se présentent sous des formes analogues.

### EXEMPLE 3 :

On part d'une structure poreuse en alumine constituée par un bloc en céramique de géométrie prismatique, percé de 19 canaux parallèles de 4 millimètres de diamètre. La surface de chaque canal est recouverte d'une couche en céramique microporeuse d'un diamètre moyen de 0,8 micron.

On prépare par dissolution au bain-marie à 60°C une solution de polyphosphazène contenant :
- 2% pondéraux de poly(p-méthoxy phénoxy, s-butyl phénoxy, o-allyl phénoxy) phosphazène,
- 98% pondéraux de méthyl éthyl cétone.

Le groupement o-allyl phénoxy représente environ 10% des groupements de polyphosphazène.

Après refroidissement de la solution, on ajoute un agent de réticulation : le bis(tertiobutyl peroxy) 2,2 butane à raison de 2% par rapport au polyphosphazène. La solution est filtrée sur un tamis en nylon, comme dans les exemples précédents.

On procède à une immersion lente du bloc macroporeux dans cette solution. Au bout de 60 secondes, le bloc est retiré. Il est séché pendant 18 heures à la température ambiante. Après séchage, on réticule le film en le cuisant une heure à 160°C.

### EXEMPLE 4 :

On utilise comme structure poreuse un tube en verre de 4 millimètres de diamètre intérieur, et dont le diamètre moyen des pores est de 20 nm.

On prépare par dissolution au bain-marie à 50°C une solution de polyphosphazène contenant :
- 1% de poly bis éthoxy phosphazène,
- 99% de méthanol.

Après refroidissement, la solution est filtrée sur un tamis en nylon comme dans les exemples précédents.

On procède alors à l'imprégnation de la structure poreuse. Pour cela, on réalise une filtration tangentielle de cette solution au travers du tube de verre.

On arrête la dépose après 35 minutes de filtration. Le tube de verre est alors relié par l'une de ses extrémités à un circuit d'air comprimé. L'air délivré est deshuilé et réchauffé à 45°C. La seconde extrémité du tube est obstruée par un bouchon.

On procède alors au soufflage de la pièce, le débit d'air étant de 30 litres à la minute. Cette opération est poursuivie pendant 2 heures afin d'achever le séchage de la pièce.

### EXEMPLE 5 :

On utilise comme structure poreuse un tube en céramique poreuse de 7 millimètres de diamètre intérieur, et dont le diamètre moyen des pores est de 15 microns.

On prépare par dissolution à la température ambiante une solution de polyphosphazène contenant :
- 5% pondéraux de poly(p-trifluorométhyl phénoxy, p-butényl phénoxy) phosphazène,
- 94,95% pondéraux d'acétone,
- 0,05% pondéraux de diméthyl 2,5 bis(t-butyl peroxy) 2,5 hexane.

Après dissolution, la solution est filtrée sur un tamis en nylon comme dans les exemples précédents.

On procède à une immersion lente du bloc macroporeux dans la solution, de façon à réaliser l'imprégnation de la structure poreuse. Après 30 secondes, le tube est retiré.

Une extrémité du tube est ensuite reliée à une bouteille d'azote à l'aide d'une canalisation et d'un détendeur régulateur, l'autre extrémité étant partiellement fermée. Il est procédé alors à l'opération de soufflage à l'aide de l'azote dont le débit est de 0,05 l/mn. Cette opération dure 3 heures.

Après le soufflage, il est procédé à une cuisson de réticulation à 150°C pendant 2 heures.

### EXEMPLE 6 :

On utilise un bloc en céramique poreuse tel que décrit dans l'exemple 3, et dont la surface interne des canaux est recouverte d'une couche en céramique poreuse dont le diamètre moyen des pores est de 5 microns.

On prépare par dissolution à la température ambiante une solution de polyphosphazène contenant :
- 3% pondéraux de poly(o-propyl phénoxy, p-phénoxy phénoxy) phosphazène,
- 32% pondéraux d'éther ethylique,
- 65% pondéraux d'éthanol.

Après dissolution, la solution est filtrée sur un tamis en nylon comme dans les exemples précédents.

On procède alors à l'imprégnation de la structure poreuse par filtration frontale de la solution de polyphosphazène. Le bloc céramique est ensuite séché à la température ambiante pendant 48 heures.

## Revendications

1. Membrane pour dispositif de filtration ou de séparation de gaz ou de liquide, constituée par une structure poreuse en au moins un matériau choisi parmi la céramique frittée, les métaux frittés, le carbone microporeux, le verre microporeux, ladite structure comportant un support macroporeux avec plusieurs couches microporeuses superposées, la couche microporeuse superficielle ayant la porosité la plus fine, caractérisée par le fait que l'ensemble de la surface extérieure et de la surface intérieure des pores (11, 14) de ladite structure est recouvert d'un film (2) hydrophobe, mince et continu d'un polyphosphazène, l'épaisseur dudit film étant comprise entre 0,01% et 10% du diamètre moyen des pores (11, 14) de ladite couche microporeuse superficielle, lui-même compris entre 0,02 et 15 µm.

2. Membrane selon la revendication 1, caractérisée par le fait que ledit polyphosphazène est de type linéaire, c'est-à-dire que ses atomes de phosphore et d'azote forment une chaîne, chaque atome de phosphore portant deux substituants organiques R et R'.

3. Membrane selon la revendication 2, caractérisée par le fait que ledit polyphosphazène est un polyalkyloxyphosphazène, lesdits substituants R et R' étant des chaînes alkyl liées au phosphore par un atome d'oxygène.

4. Membrane selon la revendication 3, caractérisée par le fait que ledit polyphosphazène est choisi parmi le poly bis(trifluoroéthoxy) phosphazène et le poly bis éthoxy phosphazène.

5. Membrane selon la revendication 2, caractérisée par le fait que ledit polyphosphazène est un polyalkylaminephosphazène, les substituants R et R' étant des chaînes alkyl liées au phosphore par un atome d'azote.

6. Membrane selon la revendication 5, caractérisée par le fait que ledit polyphosphazène est choisi parmi le poly bis(éthylamine) phosphazène et le poly bis(butylamine) phosphazène.

7. Membrane selon la revendication 2, caractérisée par le fait que ledit polyphosphazène est un polyaryloxy phosphazène, lesdits substituants organiques R et R' étant des noyaux benzéniques portant eux-mêmes un atome d'hydrogène ou des groupes organiques, lesdits noyaux benzéniques étant liés au phosphore par un atome d'oxygène.

8. Membrane selon la revendication 7, caractérisée par le fait que lesdits groupes organiques sont choisis parmi les radicaux méthoxy, phénoxy, méthyl, éthyl, propyl et ses isomères, butyl et ses isomères, vinyl, allyl, butényl, trichlorométhyl, trifluorométhyl.

9. Procédé de préparation d'une membrane selon la revendication 1, caractérisé par le fait qu'il comporte les phases suivantes :
- la préparation d'une solution du polyphosphazène à l'aide d'au moins un solvant de ce polymère,
- l'imprégnation de ladite structure poreuse par ladite solution, de manière que les pores (11 et 14) de ladite structure soient remplis par ladite solution,
- le séchage à température sensiblement ambiante.

10. Procédé de préparation selon la revendication 9, caractérisé par le fait que ledit solvant du polyphosphazène est choisi parmi les alcools, tel que le méthanol ou le propanol.

11. Procédé de préparation selon la revendication 9, caractérisé par le fait que ledit solvant du polyphosphazène est choisi parmi les cétones, telles que l'acétone ou la méthyl éthyl cétone.

12. Procédé de préparation selon la revendication 9, caractérisé par le fait que ledit solvant du polyphosphazène est choisi parmi les esters tels que l'acétate d'éthyle.

13. Procédé de préparation selon la revendication 9, caractérisé par le fait que ledit solvant du polyphosphazène est choisi parmi les éthers, tels que le tétrahydrofurane ou le diéthyle éther.

14. Procédé de préparation selon la revendication 9, caractérisé par le fait que ledit solvant du polyphosphazène est choisi parmi les hydrocarbures aromatiques, tels que le benzène, le toluène, le xylène.

15. Procédé de préparation selon l'une des revendications 9 à 14, caractérisé par le fait que ladite solution contient 0,5% à 10% en poids de polyphosphazène.

16. Procédé de préparation selon l'une des revendications 9 à 15, caractérisé par le fait que, ledit polyphosphazène étant choisi de manière que sa structure permette une réticulation, on ajoute à ladite solution un agent de réticulation dans une proportion inférieure à 5% en poids, et on fait suivre ladite phase de séchage par une opération de cuisson de réticulation.

17. Procédé de préparation selon la revendication 16, caractérisé par le fait que ledit polyphosphazène est un polyaryloxyphosphazène comportant des noyaux benzéniques liés au phosphore au travers d'un atome d'oxygène, portant eux-mêmes des groupes organiques et en outre une chaîne insaturée de type vinyl, allyl, butényl.

18. Procédé de préparation selon l'une des revendications 16 et 17, caractérisé par le fait que ledit agent de réticulation est un peroxyde choisi parmi le peroxyde de benzoyle, le bis(tertio butylperoxy) 2,2 butane, le terbutylcumyle peroxyde, le diméthyl 2,5 bis (ter-butylperoxy) 2,5 hexane, le carbonate d'isopropyl et de peroxy-butyl.

19. Procédé de préparation selon l'une des revendications 9 à 18, caractérisé par le fait que ladite opération de séchage est précédée d'une opération de soufflage à l'aide d'un gaz propre à travers ladite structure poreuse.

## Claims

1. A membrane for a filter device or a device for gas or liquid separation, the membrane being constituted by a porous structure made of at least one material selected from sintered ceramic, sintered metals, microporous carbon, and microporous glass, said structure including a macroporous support having a plurality of superposed microporous layers, the surface microporous layer having the finest pores, the membrane being characterized by the fact that the entire outside surface and inside surface of the pores (11, 14) of said structure is covered by a thin and continuous hydrophobic film (2) of a polyphosphazene, the thickness of said film lying in the range 0·01% to 10% of the mean diameter of the pores (11, 14) of said surface microporous layer, which diameter itself lies in the range 0.02 µm to 15 µm.

2. A membrane according to claim 1, characterized by the fact that said polyphosphazene is of the linear type, i.e. its atoms of phosphorous and nitrogen form a chain, with each phosphorous atom carrying two organic substituents R and R'.

3. A membrane according to claim 2, characterized by the fact that said polyphosphazene is a polyalkyloxyphosphazene, said substituents R and R' being alkyl chains linked to the phosphorous atoms by atoms of oxygen.

4. A membrane according to claim 3, characterized by the fact that the said polyphosphazene is selected from poly bis(trifluoroethyoxy) phosphazene and poly bis ethoxy phosphazene.

5. A membrane according to claim 2, characterized by the fact that said polyphosphazene is a polyalkylaminephosphazene, the substituents R and R' being alkyl chains linked to the phosphorous atom by atoms of nitrogen.

6. A membrane according to claim 5, characterized by the fact that said polyphosphazene is selected from poly bis(ethylamine) phosphazene and poly bis(butylamine) phosphazene.

7. A membrane according to claim 2, characterized by the fact that said polyphosphazene is a polyaryloxy phosphazene, said organic substituents R and R' being benzene rings themselves carrying hydrogen atoms or organic groups, said benzene rings being linked to the phosphorous atoms by atoms of oxygen.

8. A membrane according to claim 7, characterized by the fact that said organic groups are selected from the following radicals: methoxy; phenoxy; methyl; ethyl; propyl and isomers thereof; butyl and isomers thereof; vinyl; allyl; butenyl; trichloromethyl; and trifluoromethyl.

9. A method of preparing a membrane according to claim 1, characterized by the fact that it includes the following stages:
preparing a solution of polyphosphazene using at least one solvent of said polymer;
impregnating said porous structure with said solution, thereby causing the pores (11 and 14) of said structure to be filled with said solution; and
drying substantially at ambient temperature.

10. A method of preparation according to claim 9, characterized by the fact that said polyphosphazene solvent is selected from alcohols such as methanol and propanol.

11. A method of preparation according to claim 9, characterized by the fact that said polyphosphazene solvent is selected from cetones such as acetone and methyl ethyl cetone.

12. A method of preparation according to claim 9, characterized by the fact that said polyphosphazene solvent is selected from esters such as ethyl acetate.

13. A method of preparation according to claim 9, characterized by the fact that said polyphosphazene solvent is selected from ethers, such as tetrahydrofuran and diethyl ether.

14. A method of preparation according to claim 9, characterized by the fact that said polyphosphazene solvent is selected from aromatic hydrocarbons such as benzene, toluene, and xylene.

15. A method of preparation according to any one of claims 9 to 14, characterized by the fact that said solution contains 0·5% to 10% by weight of polyphosphazene.

16. A method of preparation according to any one of claims 9 to 15, characterized by the fact that said polyphosphazene is chosen so that its structure is capable of being cross-linked, a cross-linking agent is added to said solution to a concentration of less than 5% by weight, and said drying stage is followed by a heating operation for effecting cross-linking.

17. A method of preparation according to claim 16, characterized by the fact that said polyphosphazene is a polyaryloxyphosphazene including benzene rings linked to the phosphorous atoms via atoms of oxygen, the rings themselves carrying organic groups and in addition an unsaturated chain of the vinyl, allyl, or butenyl type.

18. A method of preparation according to claim 16 or 17, characterized by the fact that said cross-linking agent is a peroxide selected from: benzoyl peroxide, bis(tertio butylperoxy) 2,2 butane, terbutylcumyl peroxide, dimethyl 2,5 bis (ter-butylperoxy) 2,5 hexane, and isopropyl and peroxy-butyl carbonate.

19. A method of preparation according to any one of claims 9 to 18, characterized by the fact that said drying operation is preceded by an operation of blowing a gas suitable for passing through said porous structure.

## Patentansprüche

1. Membran für eine Vorrichtung zum Filtrieren und Separieren eines Gases oder einer Flüssigkeit, bestehend aus einer porösen Struktur mindestens eines Materials, das aus gesinterter Keramik, gesinterten Metallen, mikroporösem Kohlenstoff und mikroporösem Glas ausgewählt wird, wobei die Struktur einen makroporösen Träger mit mehreren übereinanderliegenden mikroporösen Schichten enthält und die oberste mikroporöse Schicht die kleinste Porengröße besitzt, dadurch gekennzeichnet, daß die Außenoberfläche und die innere Oberfläche der Poren (11, 14) der Struktur mit einer dünnen und kontinuierlichen wasserabstoßenden Schicht (2) aus einem Polyphosphazen bedeckt ist, wobei die Dicke dieser Schicht zwischen 0,01% und 10% des mittleren Durchmessers der Poren (11, 14) der oberflächlichen mikroporösen Schicht beträgt und dieser Porendurchmesser zwischen 0,02 und 15 µm liegt.

2. Membran nach Anspruch 1, dadurch gekennzeichnet, daß das Polyphosphazen linear ist, d.h. daß seine Phosphor- und Stickstoffatome eine Kette bilden, wobei jedes Phosphoratom zwei organische Substituenten R und R' trägt.

3. Membran nach Anspruch 2, dadurch gekennzeichnet, daß das Polyphosphazen ein Polyalkyloxyphosphazen ist, dessen Substituenten R und R' Alkylketten sind, die an Phosphor über ein Sauerstoffatom gebunden sind.

4. Membran nach Anspruch 3, dadurch gekennzeichnet, daß das Polyphosphazen unter Polybis(trifluorethoxy)phosphazen und Polybisethoxyphosphazen ausgewählt wird.

5. Membran nach Anspruch 2, dadurch gekennzeichnet, daß das Polyphosphazen Polyalkylaminphosphazen ist und die Substituenten R und R' Alkylketten sind, die an Phosphor über ein Stickstoffatom gebunden sind.

6. Membran nach Anspruch 5, dadurch gekennzeichnet, daß das Polyphosphazen ausgewählt wird unter Polybis(ethylamin)phosphazen und Polybis(butylamin)phosphazen.

7. Membran nach Anspruch 2, dadurch gekennzeichnet, daß das Polyphosphazen ein Polyaryloxyphosphazen ist und die organischen Substituenten R und R' Benzolringe sind, die ihrerseits ein Wasserstoffatom oder organische Gruppen tragen, wobei die Benzolringe über ein Sauerstoffatom an Phosphor gebunden sind.

8. Membran nach Anspruch 7, dadurch gekennzeichnet, daß die organischen Gruppen ausgewählt sind unter den Radikalen Methoxy, Phenoxy, Methyl, Äthyl, Propyl und dessen Isomere, Butyl und dessen Isomere, Vinyl, Allyl, Butenyl, Trichlormethyl, Trifluormethyl.

9. Verfahren zur Herstellung einer Membran nach Anspruch 1, dadurch gekennzeichnet, daß es folgende Phasen aufweist:
- Herstellung einer Lösung von Polyphosphazen mit Hilfe mindestens eines Lösungsmittels für dieses Polymer,
- Imprägnierung der porösen Struktur mit dieser Lösung, so daß die Poren (11, 14) der Struktur mit der Lösung gefüllt werden,
- Trocknen bei Zimmertemperatur.

10. Herstellungsverfahren nach Anspruch 9, dadurch gekennzeichnet, daß das Lösungsmittel für das Polyphosphazen unter den Alkoholen wie z.B. Methanol oder Propanol ausgewählt wird.

11. Herstellungsverfahren nach Anspruch 9, dadurch gekennzeichnet, daß das Lösungsmittel für das Polyphosphazen unter den Ketonen wie z.B. Azeton oder Methylethylketon ausgewählt wird.

12. Herstellungsverfahren nach Anspruch 9, dadurch gekennzeichnet, daß das Lösungsmittel für das Polyphosphazen unter den Estern ausgewählt wird, wie z.B. Ethylazetat.

13. Herstellungsverfahren nach Anspruch 9, dadurch gekennzeichnet, daß das Lösungsmittel für das Polyphosphazen unter den Äthern ausgewählt wird, wie z.B. Tetrahydrofuran oder Diethyläther.

14. Herstellungsverfahren nach Anspruch 9, dadurch gekennzeichnet, daß das Lösungsmittel für das Polyphosphazen unter den aromatischen Kohlenwasserstoffen wie z.B. Benzol, Toluol, Xylol ausgewählt wird.

15. Herstellungsverfahren nach einem der Ansprüche 9 bis 14, dadurch gekennzeichnet, daß die Lösung 0,5 bis 10 Gew% Polyphosphazen enthält.

16. Herstellungsverfahren nach einem der Ansprüche 9 bis 15, dadurch gekennzeichnet, daß ein Polyphosphazen gewählt wird, dessen Struktur eine Vernetzung erlaubt, daß der Lösung ein Vernetzungsmittel in einem Anteil von weniger als 5 Gew.% hinzugefügt wird, und daß auf die Trocknungsphase eine Vernetzungsphase durch eine Wärmebehandlung folgt.

17. Herstellungsverfahren nach Anspruch 16, dadurch gekennzeichnet, daß das Polyphosphazen ein Polyaryloxyphosphazen ist, das Benzolringe enthält, die an das Phosphor über ein Sauerstoffatom gebunden sind und ihrerseits organische Gruppen sowie außerdem eine ungesättigte Kette vom Typ Vinyl, Allyl, Butenyl tragen.

18. Herstellungsverfahren nach einem der Ansprüche 16 und 17, dadurch gekennzeichnet, daß das Vernetzungsmittel ein Peroxid ist, das ausgewählt wird aus Benzoylperoxid, Bis(tertiobutylperoxy)2,2-butan, Terbutylcumylperoxid, Dimethyl-2,5bis(ter-butylperoxy)2,5-hexan, Isopropyl- und Peroxybutylkarbonat.

19. Herstellungsverfahren nach einem der Ansprüche 9 bis 18, dadurch gekennzeichnet, daß der Trocknungsphase eine Blasoperation mit Hilfe eines sauberen Gases durch die poröse Struktur hindurch vorausgeht.
